# FASCICULE DE BREVET EUROPEEN

(11) **EP 1 409 999 B1**
(45) Date de publication et mention de la délivrance du brevet: **27.06.2007**
(21) Numéro de dépôt: 02790207.1
(22) Date de dépôt: 22.07.2002
(51) Int. Cl.: G01N 21/64, G01N 30/74, G01N 27/447

(54) **APPAREIL DE SEPARATION PAR ELECTROPHORESE SUR MICROCANAUX ET DE DETECTION PAR FLUORESCENCE INDUITE PAR LASER**
VORRICHTUNG ZUR ELEKTROPHORETISCHEN TRENNUNG AUF MIKROKANÄLEN UND ZUM LASERINDUZIERTEN FLUORESZENZNACHWEIS
APPARATUS FOR ELECTROPHORESIS SEPARATION ON MICROCHANNELS AND FOR LASER-INDUCED FLUORESCENCE DETECTION

(30) Priorité: 25.07.2001 FR 0109955
(43) Date de publication de la demande: 21.04.2004
(73) Titulaire: Picometrics, 31450 Montgiscard (FR)
(72) Inventeur: COUDERC, François, F-31300 Toulouse (FR); NERTZ, Michel, F-31570 Sainte Foy d'Aigrefeuille (FR); FEURER, Bernard, F-31500 Toulouse (FR)
(74) Mandataire: Abello, Michel
(86) Numéro de dépôt international: PCT/FR2002/002612
(87) Numéro de publication internationale: WO 2003/010522

(56) Documents cités:
- WO-A-00/04371
- DE-A- 19 817 738
- US-A- 6 008 055
- BRUIN G J M: "RECENT DEVELOPMENTS IN ELECTROKINETICALLY DRIVEN ANALYSIS ON MICROFABRICATED DEVICES" ELECTROPHORESIS, WEINHEIM, DE, vol. 21, 2000, pages 3931-3951, XP001031800 ISSN: 0173-0835 cité dans la demande

## Description

La présente invention concerne un appareil de séparation par électrophorèse et de détection par fluorescence induite par laser, pour produire de la lumière de fluorescence à partir de substances mises en solution dans des veines liquides contenues dans des micro-canaux formés sur des supports aplatis miniaturisés et détecter cette lumière à des fins d'analyse chimique ou biochimique.

Il est connu de réaliser des mesures de fluorescence induite par laser pour identifier et doser des substances présentes dans une solution, en particulier sous forme de traces. De telles mesures ont de nombreuses applications, par exemple en biochimie.

Les séparations électrophorétiques dans des veines liquides contenues dans des micro-canaux inscrits sur des supports aplatis miniaturisés, permettent de séparer très rapidement de très petits volumes de mélanges complexes. Le faible volume d'échantillon injecté, les faibles concentrations d'espèces à analyser, et les faibles dimensions des veines liquides (quelques µm), imposent d'utiliser une méthode très sensible de détection.

La méthode de détection optique la plus communément utilisée sur des veines liquides contenues dans des micro-canaux inscrits sur des supports aplatis miniaturisés, est la fluorescence induite par laser. Ce mode de détection est sensible puisqu'il permet d'illuminer ponctuellement avec une irradiance importante la micro-veine liquide. Le montage optique couramment utilisé pour réaliser une telle détection sur une micro-veine liquide est un montage confocal en utilisant le principe d'un microscope confocal à épifluorescence (cf G.J.M. Bruin, Electrophoresis (2000), Vol. 21, pages 3931-3951).

Dans ces systèmes confocaux, l'efficacité de collection de fluorescence est faible. En effet, le volume de liquide illuminé est faible, par exemple de l'ordre de quelques centaines de µm³, et le volume de liquide observé est encore plus faible, de l'ordre du µm³. Il est donc nécessaire de limiter la profondeur de champ pour observer ce volume émetteur de fluorescence, ce qui ne permet pas de collecter l'ensemble de la fluorescence émise dans la veine liquide. Comme cette profondeur de champ est faible, l'ouverture numérique de l'objectif utilisé est d'autant plus grande, ce qui impose des distances de travail très courtes. Toutefois, lorsqu'une plaque de polymère ou de silice recouvre les micro-canaux inscrits sur des supports aplatis miniaturisés, l'expérimentateur doit utiliser des objectifs à distance de travail plus importante et collecte donc moins de signal de fluorescence. En outre, le positionnement d'un tel détecteur pour collecter la fluorescence est extrêmement délicat, puisque les tolérances de positionnement de l'objectif sur le micro-canal sont très faibles (inférieures au micron).

Le document WO 00/04371 propose un montage d'électrophorèse capillaire utilisant un capillaire de silice revêtu extérieurement d'une couche de polymère d'indice de réfraction inférieur à celui d'un milieu de séparation remplissant l'intérieur du capillaire, dans lequel on éclaire le capillaire dans une géométrie orthogonale, la direction de propagation de la lumière d'excitation étant transverse au capillaire, tandis que la lumière de fluorescence est collectée dans la direction axiale du capillaire. Selon ce document, la lumière qui est émise ou diffusée à proximité de la surface extérieure du capillaire se propage en spirale tout le long du capillaire à proximité de sa surface extérieure, tandis que la lumière émise au centre du capillaire, comme la fluorescence induite par laser, quitte statistiquement le capillaire à proximité de son centre, ce qui permet d'effectuer un filtrage spatial de la lumière parasite au niveau du détecteur. Cependant, ce document ne décrit pas l'application à des veines liquides contenues dans des micro-canaux inscrits sur des supports aplatis miniaturisés.

La présente invention a pour but de fournir un appareil de séparation par électrophorèse et de détection par fluorescence induite par laser de haute sensibilité, pour veines liquides contenues dans des micro-canaux formés sur des supports aplatis miniaturisés, qui ne présente pas les inconvénients précités ou certains d'entre eux.

Pour cela, l'invention fournit un appareil de séparation par électrophorèse sur veine liquide et de détection par fluorescence induite par laser, comportant :
- un support aplati miniaturisé présentant une surface sensiblement plane sur laquelle sont formés au moins un puits contenant l'électrolyte de séparation et/ou l'échantillon à analyser et au moins un micro-canal de migration servant de veine liquide, ledit micro-canal étant apte à contenir une solution comprenant au moins une substance pouvant subir une réaction de fluorescence induite par laser, le matériau dudit support étant de préférence sensiblement transparent pour une lumière excitatrice,
- au moins un moyen de projection apte à projeter un faisceau de lumière excitatrice localement sur une zone d'excitation dudit micro-canal selon une direction formant un angle supérieur à 60° avec une direction longitudinale dudit micro-canal, ladite lumière excitatrice étant apte à induire une réaction de fluorescence dans ladite ou une desdites substance(s),
l'appareil étant caractérisé par :
- un moyen collecteur optique couplé mécaniquement à une extrémité libre dudit micro-canal et agencé de manière à collecter de la lumière de fluorescence se propageant sensiblement selon la direction longitudinale du micro-canal,
- un moyen de mesure optique couplé audit moyen collecteur de manière à pouvoir mesurer ladite lumière de fluorescence collectée,
- un moyen de traitement apte à traiter un signal de mesure transmis par ledit moyen de mesure pour produire un résultat d'analyse de ladite solution,
ledit micro-canal présentant une première portion formant réservoir à section interne élargie depuis ladite extrémité libre jusqu'au moins ladite zone d'excitation, ladite première portion se prolongeant par une paroi interne de forme sensiblement conique, ellipsoïdale ou paraboloïde dont une face est tournée vers ladite extrémité libre et apte à réfléchir ladite lumière de fluorescence vers ladite extrémité libre, et débouchant sur une deuxième portion de micro-canal à section interne réduite, cette dernière étant en communication avec le ou les puits précités.

Cet appareil est particulièrement efficace grâce à l'utilisation d'une paroi conique, ellipsoïdale ou parabolique de la veine liquide au niveau de l'illumination par le laser, qui permet la réflexion de la fluorescence vers une fibre optique fixée à l'extrémité libre de la veine liquide.

Avantageusement, ladite paroi interne de forme sensiblement conique, ellipsoïdale ou paraboloïde est revêtue d'une couche métallique réfléchissante et résistante à l'oxydation, par exemple en or, aluminium, argent ou platine, notamment par un procédé de dépôt d'évaporation sous vide.

Selon une autre caractéristique, toutes les parois du micro-canal au niveau de la zone d'excitation sont revêtues de ce matériau réfléchissant, à l'exception d'une partie au moins de la paroi de fond du micro-canal qui en est dépourvue au voisinage des parois internes précitées de forme conique, ellipsoïdale ou paraboloïde.

Avantageusement, ledit support comporte au moins deux électrodes reliées à une source de tension et agencées respectivement au niveau d'un puits et de ladite zone d'excitation du micro-canal de manière à pouvoir établir une chute de potentiel le long dudit micro-canal pour faire migrer par électrophorèse ladite ou une desdites substance(s) en solution.

Avantageusement, le revêtement métallique au niveau de ladite paroi interne de forme sensiblement conique, ellipsoïdale ou paraboloïde sert d'électrode cathodique.

De préférence, le moyen de projection comprend une source de lumière agencée latéralement à distance du micro-canal et des moyens optiques agencés entre la source de lumière et le micro-canal pour adapter la section transversale dudit faisceau de lumière excitatrice à la largeur intérieure dudit micro-canal.

Avantageusement, le faisceau laser a une section transversale elliptique dont le grand axe est perpendiculaire à l'axe longitudinal du micro-canal et s'étend sensiblement sur la largeur du micro-canal, le petit axe étant sensiblement parallèle ou confondu avec ledit axe longitudinal du micro-canal, ce qui permet de conserver la résolution électrophorétique des séparations.

Avantageusement, le support pourrait être réalisé dans un polymère d'indice de réflexion inférieur à celui de l'eau.

Ledit support peut être également en un matériau dont l'indice de réfraction est supérieur à celui de l'eau, par exemple en silice.

Au sens de l'invention, l'eau dans le micro-canal est un électolyte constitué essentiellement d'eau (avec un indice de réfraction de l'ordre de 1,33 pour une longueur d'onde de l'ordre de 488 nm) ou de solvants organiques miscibles à l'eau, acides, sels solubles dans l'eau, couramment utilisés pour le transport de substances à séparer, ou bien d'un hydrogel (par exemple avec un indice de réfraction de l'ordre de 1,36).

De préférence, ledit micro-canal présente une profondeur d'au plus 100 µm, et en général de l'ordre de 10 µm, et une largeur d'au plus 400 µm, et en général de l'ordre de 50 µm. La section du micro-canal est, de préférence, rectangulaire et ouverte sur ladite surface plane du support, mais elle peut aussi être semi-circulaire. Le micro-canal peut être laissé ouvert à l'air libre, mais il peut aussi être recouvert d'une plaque de verre d'un millimètre d'épaisseur ou autre matériau transparent.

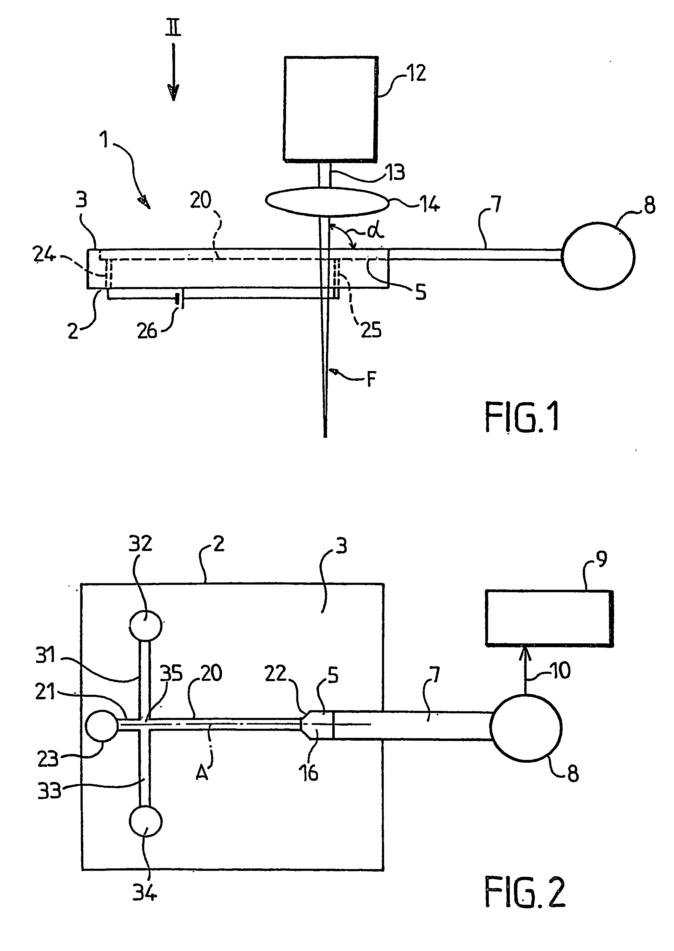

L'invention sera mieux comprise, et d'autres buts, détails, caractéristiques et avantages de celle-ci apparaîtront plus clairement au cours de la description suivante d'un mode de réalisation particulier de l'invention, donné uniquement à titre illustratif et non limitatif, en référence aux dessins annexés. Sur ces dessins :
- 1a figure 1 est une vue latérale schématique d'un appareil selon l'invention,
- la figure 2 est une vue de dessus de la figure 1, suivant la flèche II, et
- la figure 3 est une vue agrandie d'un détail de l'appareil de la figure 1.

Dans la figure 1, le dispositif d'analyse 1 est intégré à un appareil miniaturisé de séparation comportant des micro-canaux 20, 21, 31 et 33, formant des veines liquides, formés sur la surface plane 3 d'un support en polymère ou silice 2 de forme parallélépipédique. On fait migrer des espèces chimiques dans une solution électrolytique remplissant les veines sous l'effet d'une différence de potentiel électrique produite par un source de tension continue 26. Le polymère du matériau 2 peut être en polymère présentant un indice de réfraction inférieur à celui de la solution électolytique. La ou les veine(s) liquide(s) contenant les espèces chimiques devant être détectées par fluorescence, c'est à dire les veines 20 et 21 dans l'exemple représenté, comportent à une première extrémité borgne un puits anodique 23, dans lequel une électrode anodique 24 est en contact électrique avec la solution électriquement conductrice et, au voisinage d'une seconde extrémité libre une zone d'excitation élargie 16, dans laquelle une électrode cathodique 25 est en contact électrique avec la solution. Les électrodes 24 et 25 sont reliées à la source de tension 26, par exemple par des contacts électriques fixés sur la surface du substrat 2 opposée aux veines 20 et 21.

La zone d'excitation élargie 16 est éclairée par un moyen de projection comprenant une source de lumière excitatrice 12 (pouvant être un laser ou une lampe) et un jeu de lentilles 14. La source de lumière excitatrice 12 projette un faisceau de lumière excitatrice 13 selon une direction d'incidence formant un angle α supérieur à 60° et sensiblement égal à 90° sur la figure 1, avec la direction axiale A de la veine 20 et le jeu de lentilles 14 permet d'adapter le faisceau de lumière excitatrice F à la section de la zone d'excitation élargie 16 de la veine 20.

Ladite zone d'excitation élargie est contenue dans une portion élargie du canal 20 et forme un réservoir 5 jusqu'à son extrémité libre vers une fibre optique collectrice 7 agencée dans le prolongement de la veine 20. Ledit réservoir 5 se prolonge, à l'opposé, par une paroi interne 22 de forme sensiblement conique, ellipsoïdale ou paraboloïde dont une face est tournée vers ladite extrémité libre et apte à réfléchir ladite lumière de fluorescence vers ladite extrémité libre. Ladite paroi 22 débouche sur une deuxième portion du micro-canal 20 à section interne réduite, cette dernière étant en communication avec le puits précité 23, via le micro-canal 21. Le couplage mécanique entre la fibre optique 7 et le support 2 est réalisé par encastrement étanche ou collage d'une partie d'extrémité de la fibre optique 7 dans une rainure à section rectangulaire ou hémicylindrique 5 de dimension correspondante formée dans la surface du support 2 dans le prolongement de la veine 20. Le diamètre de la fibre optique est au moins identique à la largeur de la zone d'excitation élargie 16.

Le faisceau directionnel de lumière excitatrice 13 traverse un jeu de lentilles 14 que l'on adapte pour faire converger le faisceau F sur la portion 16 du micro-canal 20 de manière que le diamètre du faisceau F au niveau du micro-canal 20 soit sensiblement égal à la largeur de la portion 5 du micro-canal 20. Ainsi, la perte d'une partie de la lumière d'excitation qui ne rencontrerait pas la solution est minimisée, tandis que le volume de solution éclairé reste suffisant pour induire de la lumière de fluorescence en quantité détectable dès les très faibles concentrations de substance fluorescente.

Le jeu de lentilles 14 pourrait aussi faire diverger le faisceau F, par exemple dans le cas où la source 12 produit un faisceau 13 plus fin que l'intérieur du micro-canal 20.

De préférence, si l'on incline la direction d'incidence du faisceau F part rapport à l'axe A, on l'incline de façon à réduire l'angle α entre ladite direction d'incidence et l'axe A situé du côté de la fibre optique 7, pour orienter la lumière d'excitation à l'opposé de ladite fibre optique et réduire ainsi la diffusion de lumière d'excitation vers le moyen de mesure.

La ou les fibres optiques 7 collecte(nt) axialement la lumière de fluorescence émise et la guide(nt) jusqu'à un tube photomultiplicateur 8, ou un autre type de détecteur optique. Le tube photomultiplicateur 8 produit un signal de mesure qui est transporté par un moyen de liaison adapté 10 jusqu'à un système de traitement de données 9, par exemple un micro-ordinateur, lequel comporte des moyens logiciels, connus de l'homme du métier, pour traiter le signal de mesure reçu et produire un résultat d'analyse, par exemple des mesures quantitatives absolues ou relatives de concentration de la ou des substance(s) émettant de la lumière de fluorescence.

Du fait de la bonne transmission optique entre le micro-canal 20 et la fibre collectrice 7, il n'est pas nécessaire de disposer des moyens de filtrage spectral ou spatial entre le micro-canal 20 et le détecteur optique, bien qu'il soit aussi possible d'en prévoir pour améliorer les seuils de détection. Bien que non représentés, des moyens d'alimentation électriques sont intégrés ou reliés au tube photomultiplicateur 8 et à la source de lumière 12 pour leur mise en fonctionnement.

Comme visible sur la figure 2, le dispositif de séparation par électrophorèse selon l'invention, par exemple par électromigration, électroendosmose, électrophorèse de zone ou miscellaire, isotachophorèse ou électrochromatographie, comporte une solution électrolytique qui occupe les puits 23, 32 et 34 et les micro-canaux 20, 21, 31 et 33. Par exemple, le puits 32 contient un tampon latéral permettant la migration, le puits 23 contient l'échantillon à analyser et le puits 34 un colorant réactif pour produire un dérivé fluorescent au contact de la substance analyser et à détecter, au cas où ladite substance n'émettrait pas ou pas assez de fluorescence sous la lumière d'excitation. Chacun des puits est muni d'une électrode anodique qui est activée suivant un ordre prédéterminé. Par exemple, on peut prévoir que l'électrode associée au puits 23 est activée en premier pour que les substances à détecter migrent jusqu'au croisement ou intersection 35 entre les différents micro-canaux, puis l'électrode associée au puits 34 est activée à la place pour que l'agent réactif atteigne à son tour ledit croisement et donc la substance ayant préalablement migré jusqu'au croisement et réagisse avec celle-ci et enfin l'électrode associée au puits 32 est activée pour que lesdites substances soient séparées dans le micro-canal 20 jusqu'à la zone d'excitation 16. Bien entendu, l'invention n'est pas limitée à 3 puits, mais couvre des réalisations à un ou plusieurs puits et un ou plusieurs micro-canaux de séparation.

L'électrolyte est en contact électrique avec chaque électrode plongée dans le puits correspondant ou le réservoir 5. Les électrodes peuvent être intégrées au support 2.

Cet élargissement du micro-canal 20 au niveau de la zone d'excitation 16 permet d'irradier un plus grand volume d'échantillon.

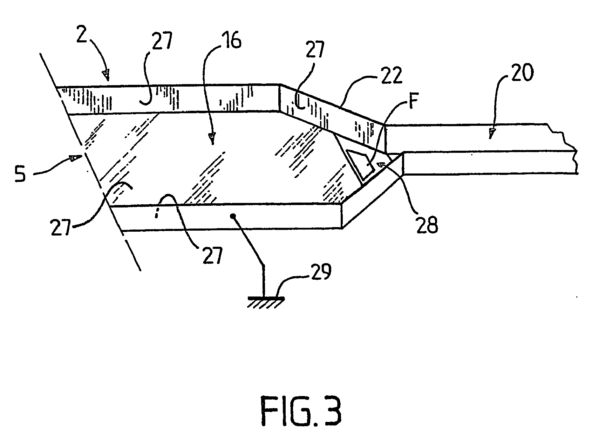

La figure 3 présente le détail de la zone d'excitation élargie: La paroi 22 présente une face conique ou ellipsoïdale ou parabolique pour favoriser la réflexion de la lumière de fluorescence vers une fibre optique collectrice 7 agencée dans le prolongement de la rainure 5 à son extrémité cathodique. Un revêtement miroir métallique en or, argent, aluminium ou platine 27 est déposé par exemple par un procédé de dépôt d'évaporation sous vide sur le fond du micro-canal et ses parois latérales, à l'exception d'une partie 28 du fond du micro-canal adjacente à ladite paroi 22, pour empêcher la réflexion du faisceau lumineux F dans le micro-canal. La surface métallique 27 peut être reliée à la masse 29 afin de fermer le circuit électrique délivrant la tension continue 26.

Pour exciter simultanément la fluorescence de plusieurs substances, on peut aussi prévoir plusieurs moyens de projection avec des sources de lumière excitatrice ayant différentes longueurs d'ondes, agencées côte à côte le long du support 2 et/ou à sa périphérie. Dans ce cas, la fluorescence des différentes substances se fera à des longueurs d'ondes différentes et il sera opportun d'adjoindre en aval du moyen de collection un système de séparation spectrale, de type filtre optique, monochromateur à prisme ou réseau de diffraction, permettant de sélectionner une ou plusieurs bandes de longueurs d'onde d'émission. Ce sera également le cas si la source d'excitation est un laser émettant dans l'UV, les différentes substances pouvant alors présenter des fluorescences natives spécifiques.

Cet appareil est avantageux pour la détection de fluorescence sur de multiples micro-canaux de séparation, requérant une collection de fluorescence sur chacun des micro-canaux, car l'utilisation d'un faisceau de fibres optiques est facilitée (une fibre optique par micro-canal). Dans ce cas, l'excitation peut être effectuée soit par division du faisceau laser par un faisceau de fibres optiques, soit par balayage rapide en utilisant un miroir tournant.

Pour conserver les résolutions électrophorétiques et chromatographiques, le faisceau d'excitation F peut présenter une section transversale de forme elliptique, le grand axe de cette ellipse étant perpendiculaire à l'axe longitudinal A du micro-canal et le petit axe de cette ellipse étant parallèle audit axe A.

Bien que l'invention ait été décrite en liaison avec un mode de réalisation particulier, il est bien évident qu'elle n'y est nullement limitée et qu'elle comprend tous les équivalents techniques des moyens décrits ainsi que leurs combinaisons si celles-ci entrent dans le cadre des revendications.

## Revendications

1. Appareil intégré (1) de séparation par électrophorèse sur veine liquide et de détection par fluorescence induite par laser, comportant :
- un support aplati miniaturisé (2) présentant une surface sensiblement plane (3) sur laquelle sont formés au moins un puits contenant l'électrolyte de séparation et/ou l'échantillon à analyser (23, 32, 34) et au moins un micro-canal de migration servant de veine liquide (20, 21, 31, 33), ledit micro-canal étant apte à contenir une solution comprenant au moins une substance pouvant subir une réaction de fluorescence induite par laser,
- au moins un moyen de projection (12) apte à projeter un faisceau de lumière excitatrice localement sur une zone d'excitation (16) dudit micro-canal (20) selon une direction formant un angle (α) supérieur à 60° avec une direction longitudinale (A) dudit micro-canal, ladite lumière excitatrice étant apte à induire une réaction de fluorescence dans ladite ou une desdites substance(s),
l'appareil étant **caractérisé par** :
- un moyen collecteur optique (7) couplé mécaniquement à une extrémité libre dudit micro-canal (20) et agencé de manière à collecter de la lumière de fluorescence se propageant sensiblement selon la direction longitudinale (A) du micro-canal,
- un moyen de mesure optique (8) couplé audit moyen collecteur de manière à pouvoir mesurer ladite lumière de fluorescence collectée,
- un moyen de traitement (9) apte à traiter un signal de mesure transmis par ledit moyen de mesure pour produire un résultat d'analyse de ladite solution,
ledit micro-canal (20) présentant une première portion formant réservoir (5) à section interne élargie depuis ladite extrémité libre jusqu'au moins ladite zone d'excitation (16), ladite première portion se prolongeant par une paroi interne (22) de forme sensiblement conique, ellipsoïdale ou paraboloïde dont une face est tournée vers ladite extrémité libre et apte à réfléchir ladite lumière de fluorescence vers ladite extrémité libre, et débouchant sur une deuxième portion de micro-canal à section interne réduite, cette dernière étant en communication avec le ou les puits précités.

2. Appareil selon la revendication 1, **caractérisé par le fait que** ledit support comporte au moins une électrode anodique (24) et une électrode cathodique (25) reliées à une source de tension (26) et agencées respectivement au niveau d'un puits et de ladite zone d'excitation (16) du micro-canal (20) de manière à pouvoir établir une chute de potentiel le long dudit micro-canal pour faire migrer par électrophorèse ladite ou une desdites substance(s) en solution.

3. Appareil selon l'une des revendications 1 et 2, **caractérisé par le fait que** la paroi interne (22) sensiblement conique, ellipsoïdale ou paraboloïde du micro-canal (20) est revêtue d'un matériau réfléchissant métallique (27) résistant à l'oxydation.

4. Appareil selon les revendications 2 et 3 prises en combinaison, **caractérisé par le fait que** le revêtement métallique (27) au niveau de ladite paroi interne (22) de forme sensiblement conique, ellipsoïdale ou paraboloïde sert d'électrode cathodique.

5. Appareil selon la revendication 4, **caractérisé par le fait que** le revêtement métallique (27) est relié à la masse (29).

6. Appareil selon l'une des revendications 3 à 5, **caractérisé par le fait que** toutes les parois du micro-canal au niveau de la zone d'excitation (16) sont revêtues de ce matériau réfléchissant (27), à l'exception d'une partie (28) au moins de la paroi de fond du micro-canal (20) qui en est dépourvue au voisinage des parois internes précitées (22) de forme conique, ellipsoïdale ou paraboloïde.

7. Appareil selon l'une des revendications 1 à 6, **caractérisé par le fait que** ledit micro-canal présente une profondeur d'au plus 100 µm, et de préférence de l'ordre de 10 µm, et une largeur d'au plus 400 µm, et de préférence de l'ordre de 50 µm.

8. Appareil selon l'une des revendications 1 à 7, **caractérisé par le fait que** ledit moyen de projection comprend une source de lumière (12) agencée latéralement à distance dudit micro-canal (20) et des moyens optiques (14) agencés entre la source de lumière et le micro-canal pour adapter la section transversale dudit faisceau de lumière excitatrice (F) à la largeur intérieure dudit micro-canal.

9. Appareil selon la revendication 8, **caractérisé par le fait que** le faisceau laser (F) a une section transversale elliptique dont le grand axe est perpendiculaire à l'axe longitudinal (A) du micro-canal et s'étend sensiblement sur la largeur du micro-canal, le petit axe étant sensiblement parallèle ou confondu avec ledit axe longitudinal du micro-canal.

10. Appareil selon l'une des revendications 1 à 9, **caractérisé par le fait que** la section du micro-canal (20) est rectangulaire et ouverte à l'air libre.

## Claims

1. An integrated apparatus (1) for electrophoretic separation on a liquid stream and for laser-induced fluorescence detection, comprising:
- a miniaturized flattened support (2) having a substantially planar surface (3), on which surface at least one well (23, 32, 34) containing the separation electrolyte and/or the specimen to be analyzed and at least one migration microchannel (20, 21, 31, 33) serving as the liquid stream are formed, said microchannel being capable of containing a solution comprising at least one substance that can undergo a laser-induced fluorescence reaction;
- at least one projection means (12) capable of projecting an excitation light beam locally onto an excitation region (16) of said microchannel (20) in a direction making an angle (α) of greater than 60° with a longitudinal direction (A) of said microchannel, said excitation light being capable of inducing a fluorescence reaction in said substance or one of said substances;
the apparatus being **characterized by**:
- an optical collecting means (7) mechanically coupled to a free end of said microchannel (20) and placed so as to collect fluorescence light propagating substantially along the longitudinal direction (A) of the microchannel;
- an optical measurement means (8) coupled to said collecting means so as to be able to measure said collected fluorescence light; and
- a processing means (9) capable of processing a measurement signal transmitted by said measurement means in order to produce a result of the analysis of said solution;
said microchannel (20) having a first portion forming a reservoir (5) with an internal cross section that widens from the said free end up to at least said excitation region (16), said first portion being extended by a first internal wall (22) of approximately conical, ellipsoidal or paraboloidal shape, one face of which is turned toward said free end and is capable of reflecting said fluorescence light toward said free end, and emerging in a second microchannel portion having a smaller internal cross section, this latter portion being in communication with the aforementioned well or wells.

2. The apparatus as claimed in claim 1, **characterized in that** said support includes at least one anode electrode (24) and at least one cathode electrode (25) that are connected to a voltage source (26) and are placed at a well and at said excitation region (16) of the microchannel (20), respectively, so as to be able to establish a potential drop along said microchannel in order to make said dissolved substance or one of said dissolved substances migrate by electrophoresis.

3. The apparatus as claimed in either of claims 1 and 2, **characterized in that** the approximately conical (218), ellipsoidal or paraboloidal internal wall (22) of the microchannel (20) is coated with a metallic oxidation-resistant reflective material (27).

4. The apparatus as claimed in claims 2 and 3 taken in combination, **characterized in that** the metallic coating (27) on said approximately conical, ellipsoidal or paraboloidal internal wall (22) serves as cathode electrode.

5. The apparatus as claimed in claim 4, **characterized in that** the metallic coating (27) is grounded (29).

6. The apparatus as claimed in one of claims 3 to 5, **characterized in that** all the walls of the microchannel in the excitation region (16) are coated with this reflective material (27) except for at least one part (28) of the end wall of the microchannel (20), which part is devoid of said reflective material near the aforementioned internal walls (22) of conical, ellipsoidal or paraboloidal shape.

7. The apparatus as claimed in one of claims 1 to 6, **characterized in that** said microchannel has a depth of at most 100 µm, and preferably about 10 µm, and a width of at most 400 µm, and preferably about 50 µm.

8. The apparatus as claimed in one of claims 1 to 7, **characterized in that** said projection means comprises a light source (12), which is placed laterally at a certain distance from said microchannel (20), and optical means (14) that are placed between the light source and the microchannel in order to match the cross section of said excitation light beam (F) to the internal width of said microchannel.

9. The apparatus as claimed in claim 8, **characterized in that** the laser beam (F) has an elliptical cross section, the major axis of which is perpendicular to the longitudinal axis (A) of the microchannel and extends substantially over the width of the microchannel, the minor axis being approximately parallel to or coincident with said longitudinal axis of the microchannel.

10. The apparatus as claimed in one of claims 1 to 9, **characterized in that** the cross section of the microchannel (20) is rectangular and open to the air.

## Patentansprüche

1. Integrierte Vorrichtung (1) zur elektrophoretischen Trennung auf einer flüssigen Ader und zum laserinduzierten Fluoreszenznachweis mit:
- einem miniaturisierten flachen Träger (2), der eine im wesentlichen ebene Oberfläche (3) aufweist, auf der wenigstens eine, den Trennelektrolyten und/oder zu analysierende Proben enthaltende Vertiefung (23, 32, 34), und wenigstens ein als flüssige Ader dienender Wanderungs-Mikrokanal (20, 21, 31, 33) ausgespart sind, wobei der Mikrokanal eine Lösung enthalten kann, die wenigstens eine Substanz umfasst, die eine laserinduzierte Fluoreszenzreaktion durchführen kann;
- wenigstens einem Projektionsmittel (12), welches einen Anregungslichtstrahl lokal auf einen Anregungsbereich (16) des Mikrokanals (20) entlang einer Richtung projizieren kann, die einen Winkel (α) von mehr als 60° mit einer Längsrichtung (A) des Mikrokanals bildet, wobei das Anregungslicht eine Fluoreszenzreaktion in der oder den Substanz(en) induzieren kann,
wobei die Vorrichtung **gekennzeichnet ist durch**:
- ein optisches Sammelmittel (7), das mechanisch mit einem freien Ende des Mikrokanals (20) verbunden und so angeordnet ist, dass es Fluoreszenzstrahlung sammelt, die sich im wesentlichen entlang der Längsrichtung (A) des Mikrokanals ausbreitet,
- ein optisches Messmittel (8), das mit dem Sammelmittel so gekoppelt ist, dass die gesammelte Fluoreszenzstrahlung gemessen werden kann,
- ein Verarbeitungsmittel (9), das ein von dem Messmittel übertragenes Messsignal so verarbeiten kann, dass daraus ein Analyseergebnis der Lösung erzeugt wird,
wobei der Mikrokanal (20) einen ersten, ein Reservoir (5) bildenden Abschnitt mit einem vergrößertem Innenquerschnitt aufweist, der von dem freien Ende bis zumindest zu der Anregungszone (16) reicht, wobei sich der erste Abschnitt mit Innenwand (22) mit im wesentlichen konischer, ellipsoidaler oder paraboloider Form fortsetzt, vor der eine Fläche in Richtung des freien Endes gerichtet und die Fluoreszenzstrahlung in Richtung des freien Endes zurückreflektieren kann, und der in einen zweiten Abschnitt des Mikrokanals mit verringertem Innenquerschnitt mündet, wobei letzterer in kommunizierender Verbindung mit der oder den oben genannten Vertiefung(en) steht.

2. Vorrichtung gemäß Anspruch 1, **dadurch gekennzeichnet, dass** der Träger wenigstens eine anodische Elektrode (24) und eine kathodische Elektrode (25) aufweist, die mit einer Spannungsquelle (26) verbunden und auf Höhe einer Vertiefung bzw. des Anregungsbereichs (16) des Mikrokanals (20) so angeordnet sind, dass ein Potentialgefälle entlang des Mikrokanals erzeugt werden kann, um die gelösten Substanz(en) durch Elektrophorese wandern zu lassen.

3. Vorrichtung gemäß einem der Ansprüche 1 oder 2, **dadurch gekennzeichnet, dass** die im wesentlichen konische, ellipsoidale oder paraboloide Innenwand (22) des Mikrokanals (20) mit einem oxidationsbeständigen, reflektierenden metallischen Material (27) beschichtet ist.

4. Vorrichtung gemäß den kombinierten Ansprüchen 2 und 3, **dadurch gekennzeichnet, dass** die metallische Beschichtung (27) auf Höhe der im wesentlichen konisch, ellipsoidal oder paraboloid geformten Innenwand (22) als kathodische Elektrode dient.

5. Vorrichtung gemäß Anspruch 4, **dadurch gekennzeichnet, dass** die metallische Beschichtung (27) mit der Masse (29) verbunden ist.

6. Vorrichtung gemäß einem der Ansprüche 3 bis 5, **dadurch gekennzeichnet, dass** alle Wände des Mikrokanals auf Höhe des Anregungsbereichs (16) mit dem reflektierenden Material (27) beschichtet sind, mit Ausnahme eines Teils (28) wenigstens des Bodens des Mikrokanals (20), der dieses in der Nähe der oben genannten konisch, ellipsoidal oder paraboloid geformten Innenwände (22) nicht aufweist.

7. Vorrichtung gemäß einem der Ansprüche 1 bis 6, **dadurch gekennzeichnet, dass** der Mikrokanal eine Tiefe von höchstens 100 µm und bevorzugt in der Größenordnung von 10 µm und eine Breite von höchstens 400 µm und bevorzugt von 50 µm aufweist.

8. Vorrichtung gemäß einem der Ansprüche 1 bis 7, **dadurch gekennzeichnet, dass** das Projektionsmittel eine Strahlungsquelle (12) umfasst, die seitlich in einem Abstand zum Mikrokanal (20) angeordnet ist, sowie optische Mittel (14), die zwischen der Strahlungsquelle und dem Mikrokanal angeordnet sind, um den Querschnitt des Anregungslichtstrahls (F) an die Innenbreite des Mikrokanals anzupassen.

9. Vorrichtung gemäß Anspruch 8, **dadurch gekennzeichnet, dass** der Laserstrahl (F) einen elliptischen Querschnitt aufweist, dessen große Hauptachse im wesentlichen senkrecht zur Längsachse (A) des Mikrokanals orientiert ist und der sich im wesentlichen über die Breite des Mikrokanals erstreckt, wobei die kleine Hauptachse im wesentlichen parallel zur Längsachse des Mikrokanals ist oder mit dieser zusammenfällt.

10. Vorrichtung gemäß einem der Ansprüche 1 bis 9, **dadurch gekennzeichnet, dass** der Querschnitt des Mikrokanals (20) rechteckig und ins Freie offen ist.
